# EUROPÄISCHE PATENTSCHRIFT

(11) **EP 0 980 704 B1**
(45) Veröffentlichungstag und Bekanntmachung des Hinweises auf die Patenterteilung: **25.01.2006**
(21) Anmeldenummer: 99113890.0
(22) Anmeldetag: 16.07.1999
(51) Int. Cl.: B01F 7/00, F16F 15/02, B01F 15/00, F16M 7/00

(54) **Unterbau für ein Tauchmotorrührwerk mit Rotorblättern**
Base for an immersed motor agitator with rotor blades
Bâti pour un agitateur à moteur submersible avec de pales rotatives

(30) Priorität: 20.08.1998 DE 29814958 U
(43) Veröffentlichungstag der Anmeldung: 23.02.2000
(60) Teilanmeldung: 03027655.4
(73) Patentinhaber: ABS Production Lohmar GmbH, 53797 Lohmar (DE)
(72) Erfinder: Becker, Klaus, 51469 Bergisch Gladbach (DE); Dirla, Manfred, 51491 Overath (DE); Trimborn, Rolf, 53721 Siegburg (DE); Wasser, Wilfried, 53819 Seelscheid (DE)
(74) Vertreter: Lippert, Stachow & Partner

(56) Entgegenhaltungen:
- DE-A- 2 121 342
- DE-A- 3 512 131
- DE-A- 3 941 724
- DE-C- 19 620 986
- US-A- 3 829 540
- US-A- 4 671 872
- US-A- 4 983 083
- US-A- 4 992 004
- PATENT ABSTRACTS OF JAPAN vol. 008, no. 067 (C-216), 29. März 1984 (1984-03-29) & JP 58 219905 A (TSUKISHIMA KIKAI KK), 21. Dezember 1983 (1983-12-21)

## Beschreibung

Die Erfindung betrifft einen Unterbau für ein Tauchmotorrührwerk.

Unterbauten für Tauchmotorrührwerke sind in verschiedenen Ausführungsformen aus dem Stand der Technik bekannt. Die Unterbauten bestehen aus Stahlkonstruktionen, die aus miteinander verschweißten Profilen, z. B. Vierkant-Hohl-Profilen gebildet sind. Diese Stahlkonstruktionen werden zum einen mit dem vorzugsweise als Führungsrohr ausgebildeten Führungselement für das Tauchmotorrührwerk verbunden und am gegenüberliegenden Ende des Unterbaus mit Schwerlastdübeln am Boden des Beckens befestigt.

Aus der DE-A-39 00 630.1 ist ein Tauchmotorrührwerk bekannt, bei dem das Führungsrohr nur mit dem Beckenboden fest verbunden ist und bei dem zwei Stützen zur Aufnahme der Rückstoßkräfte des aus einem Motor und einem Propeller bestehenden Rührwerks vorgesehen sind, die einerseits unterhalb des Rührwerks am Führungsrohr und andererseits am Beckenboden befestigt sind.

Da diese Befestigung am Beckenboden als nachteilhaft empfunden wird, wird in der DE 39 41 724 vorgeschlagen, dass das Führungsrohr und die Stützen mit einer massiven Platte verbunden sind, die als Bodenplatte zur Aufstellung der kompletten Einheit auf dem Beckenboden dient. Die Bodenplatte ermöglicht es, das Tauchmotorrührwerk so auszugestalten, dass es noch nach der Installation im Becken umsetzbar ist.

In den Becken treten unregelmäßige Strömungen auf, so dass der Propeller des Tauchmotorrührwerks unregelmäßig angeströmt wird. Problematisch sind ferner die aufgrund des Gestells erzeugten Verwirbelungen. Diese unregelmäßige Anströmung und Verwirbelungen rufen Schwingungen innerhalb des Gestells hervor, so dass sowohl das Tauchmotorrührwerk als auch das Gestell überdurchschnittlich stark belastet werden. Diese Belastungen können schließlich zur Zerstörung des Gestells und des Tauchmotorrührwerks führen.

Zur Vibrationsdämpfung ist es beispielsweise aus der US-PS 4,671,872 bekannt, am oberen Ende des Führungsrohres vibrationsdämpfende Kissen aus Neopren an demselben anzuordnen. Auch ist es aus dieser Druckschrift bekannt, Vibrationsdämpfer zwischen dem unteren Anschlag am Führungsrohr und der an dem Führungsrohr herabzulassenden Halterung des Rührwerks anzubringen.

Der Erfindung liegt daher die Aufgabe zugrunde, einen Unterbau der eingangs genannten Art dahingehend zu verbessern, dass eine möglichst schwingungsarme Lagerung des Tauchmotorrührwerks ermöglicht wird.

Die Erfindung wird mit den Merkmalen der nebengeordneten Ansprüche 1 und 4 gelöst, vorteilhafte Ausgestaltungen sind den Unteransprüchen zu entnehmen.

Der erfindungsgemäß ausgebildete Unterbau wirkt damit als Schwingungsdämpfer, der die im Tauchmotorrührwerk und im Führungsrohr auftretenden Schwingungen aufnehmen kann, ohne zerstört zu werden. Der erfindungsgeinäße Unterbau ist damit stabil und vibrationsfest. Darüber hinaus weist der erfindungsgemäße Unterbau den Vorteil auf, daß dieser den Wirkungsgrad des Tauchmotorrührwerks aufgrund der reduzierten Verwirbelungen verbessert. Eine Wirkungsgradverbesserung von bis zu 5 % ist realisierbar.

Strömungstechnisch besonders vorteilhaft ist es, wenn der Unterbau eine Form aufweist, die den Vordrall auf der Anströmseite des Tauchmotorrührwerks reduziert. Auf diese weise werden insbesondere die zwischen den Rotorblättern und dem Unterbau auftretenden Turbulenzen unterbunden, die beim Vorbeistreichen der Rotorblätter an der Kante des Unterbaus auftreten.

Der Unterbau ist nahezu ideal starr und kostengünstig herzustellen, wenn er aus Beton gefertigt ist. Große Betonquerschnitte sind aufgrund der großen Auflagefläche und Masse darüber hinaus gut am Boden befestigbar.

Vorzugsweise ist der Unterbau einteilig ausgebildet.

Als besonders vorteilhaft hat sich dabei erwiesen, wenn der Unterbau im wesentlichen das Querschnittsprofil eines Tropfens oder einer Tragfläche, ähnlich der Tragfläche eines Flugzeugs, aufweist. Dabei wird der Unterbau, ebenso wie die Tragfläche eines Flugzeuges, derart im Becken angeordnet, daß er an dem halbkegelförmigen Ende durch das Wasser angeströmt wird. Das Wasser strömt um den Unterbau herum zu dem im wesentlichen spitz zulaufenden Ende des Unterbaus, an welchem die Rotorblätter des Tauchmotorrührwerks wirken. Im Gegensatz zu einer Flugzeugtragfläche soll jedoch der Querschnitt des Grundprofils des Unterbaus gemäß der Erfindung spiegelsymmetrisch zu einer Längsmittelebene ausgebildet sein, so daß bei Anströmung des in Strömungsrichtung vorderen halbkegelförmigen Endes keine Querkräfte erzeugt werden, wie dies bei einer Flugzeugtragfläche der Fall wäre, deren Profil auftrieberzeugend gestaltet ist und einen vom Anströmwinkel abhängigen Druckpunkt aufweist.

In einer alternativen Ausführungsform kann das spitz zulaufende Ende ferner mit einem nasenartigen Fortsatz versehen sein, der eine Umlenkung des den Unterbau umströmenden Wassers bewirkt.

Allgemein kann je nach den benötigten Strömungsverhältnissen der Unterbau entsprechend ausgestaltet werden, um die für diese Strömungsverhältnisse optimale Form aufzuweisen.

Als besonders vorteilhaft hat es sich erwiesen, den Unterbau in einer hochwertigen Betonqualität mit Stahlarmierung auszugestalten.

In einer Weiterentwicklung sind hochbelastbare Ankerschrauben zur Befestigung der Kupplungsmechanik für das Tauchmotorrührwerk in dem Unterbau eingegossen. Auf diese Weise ist eine Befestigung des Tauchmotorrührwerks und des Führungsrohres besonders einfach und schnell zu realisieren. Die Befestigung des Unterbaus auf dem Beckenboden erfolgt in einer bevorzugten Ausführungsform mit Schwerlastdübeln. Alternativ ist es hier auch denkbar, daß der Unterbau direkt an den Beckenboden angegossen oder eingegossen wird.

In einer alternativen Ausführungsform ist der Unterbau mehrteilig ausgeführt. Als fertigungstechnisch besonders einfach hat es sich erwiesen, wenn der Unterbau aus zwei Stützen mit kreisrundem Querschnitt besteht, die kolinear angeordnet sind. Die Fertigung dieser kreisrunden Stützen ist besonders einfach, da diese beispielsweise unter Verwendung von Abwasserrohren erfolgen kann. Zu diesem Zweck werden die Anker und die Stahlarmierungen in das Rohr eingesetzt und mit Beton gefüllt. Nach dem Aushärten des Betons kann das Rohr entfernt werden.

Um Verwirbelungen zwischen den Stützen zu vermeiden, kann in einer Weiterentwicklung die im Verhältnis zur Anströmung vorne gelegene Stütze einen größeren Durchmesser aufweisen als die zweite Stütze, die im Verhältnis zur ersten Stütze in Strömungsrichtung gelegen ist.

In einer Weiterentwicklung können zwischen den kreisrunden Stützen sich in Strömungsrichtung erstreckende Bleche angeordnet werden, um ein gleichmäßige Strömung zwischen den beiden Stützen zu erhalten. Auf diese Weise wird annähernd auch eine strömungstechnisch optimierte Tropfenform gebildet. So ist auch gewährleistet, daß die Strömung aufgrund von Turbulenzen zwischen den Stützen nicht abreißt.

Die Auflagefläche des Unterbaus auf dem Beckenboden kann ferner dadurch erhöht werden, daß der Unterbau an dessen Aufsetzfläche auf dem Beckenboden im Verhältnis zum restlichen Querschnitt verbreitert ist. In dem so gebildeten Bund, der einstückig an den Unterbau angegossen wird, können die Schwerlastdübel für die Bodenbefestigung angeordnet sein.

Der Sockel wirkt als Strömungsrichter und als Vordrallbrechung. Die Leistungserhöhung des Propellers erfolgt durch eine vordrallfreie und gerichtete Abströmung in Propellerrichtung, so daß eine turbulenzarme An- und Abströmung möglich ist. Die Kombination der Propellerform mit dem Sockel ergibt ein pulsationsarmes Vorbeigleiten der Rotorblätter am Sockel. Die gerichtete Abströmung reduziert die unzulässigen Schwingungen. Auf diese Weise werden die durch Stahlgestelle zusätzlich verursachten, unkollierten Strömungen im unmittelbaren Propellerbereich vermieden.

Die gerichtete Strömung bewirkt eine hohe Lebensdauer und Betriebssicherheit der Anlageteile.

Die Erfindung ist in der Zeichnung dargestellt und im folgenden beispielhaft anhand der Figuren beschrieben. Es zeigen:
- Fig. 1: einen erfindungsgemäßen Unterbau in einteiliger Ausführungsform,
- Fig. 2: einen erfindungsgemäßen Unterbau in zweiteiliger Ausführungsform,
- Fig. 3: eine vergrößerte Darstellung des Unterbaus gemäß Fig. 1 mit abgesenktem Tauchmotorrührwerk
- Fig. 4: einen Querschnitt durch eine der Stützen des Unterbaus gemäß Fig. 2,
- Fig. 5 und 6: Draufsichten verschiedener geometrischer Ausgestaltungen von Unterbauten in einteiliger Form und
- Fig. 7: eine schematische Schnittdarstellung der Befestigung beispielsweise des Unterbaus gemäß der Erfindung auf einem Betonuntergrund.

Wie aus den Figuren zu entnehmen ist, ist der Unterbau 1 auf dem Boden 2 des Beckens mit Befestigungsbolzen montiert. An dem in den Figuren oben gesehenen Ende ist ein als Leitrohr 3 ausgebildetes Leitsystem befestigt. An diesem Leitrohr 3 wird das in seiner Gesamtheit mit 4 gekennzeichnete Tauchmotorrührwerk 4 abgesenkt. In der Betriebsstellung liegt das Tauchmotorrührwerk 4 auf dem oberen Ende des Unterbaus auf. Der Unterbau 1 ist so hoch, daß die Rotorblätter des Tauchmotorrührwerks 4 in der vollständig abgesenkten Stellung nicht den Beckenboden 2 berühren können.

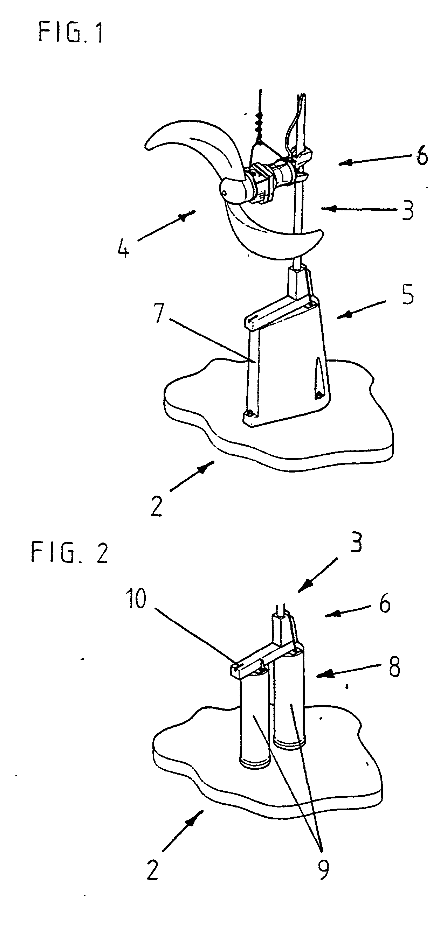

Die Fig. 1 stellt einen Unterbau in einteiliger Ausführungsform dar. Der Unterbau 5 weist im wesentlichen einen tropfenförmigen Querschnitt auf. Das halbkegelförmige Ende des Unterbaus 5 ist dabei in Richtung der Anströmseite im Becken angeordnet. Die Anströmung ist mit dem Pfeil 6 gekennzeichnet. Das spitz zulaufende Ende 7 ist strömungstechnisch so angeordnet, um den Vordrall auf der Anströmseite zu reduzieren, so daß die zwischen den Rotorblättern des Tauchmotorrührwerks und dem Unterbau 5 auftretenden Turbulenzen weitestgehend vermieden werden.

Die Fig. 2 stellt eine alternative Ausführungsform des erfindungsgemäßen Unterbaus dar, bei welchem der Unterbau 8 aus zwei Stützen 9 gebildet ist, die einen kreisrunden Querschnitt aufweisen. Diese Stützen 9 sind unter Verwendung von Rohren gegossen worden. Die z. B. aus PVC bestehenden Rohre können besonders einfach nach dem Eingießen des Betons entfernt werden. Ein auf der Oberseite der Stützen 9 angeordneter Querträger 10 überträgt die auf das Leitrohr 3 wirkenden Kräfte auf beide Stützen 9.

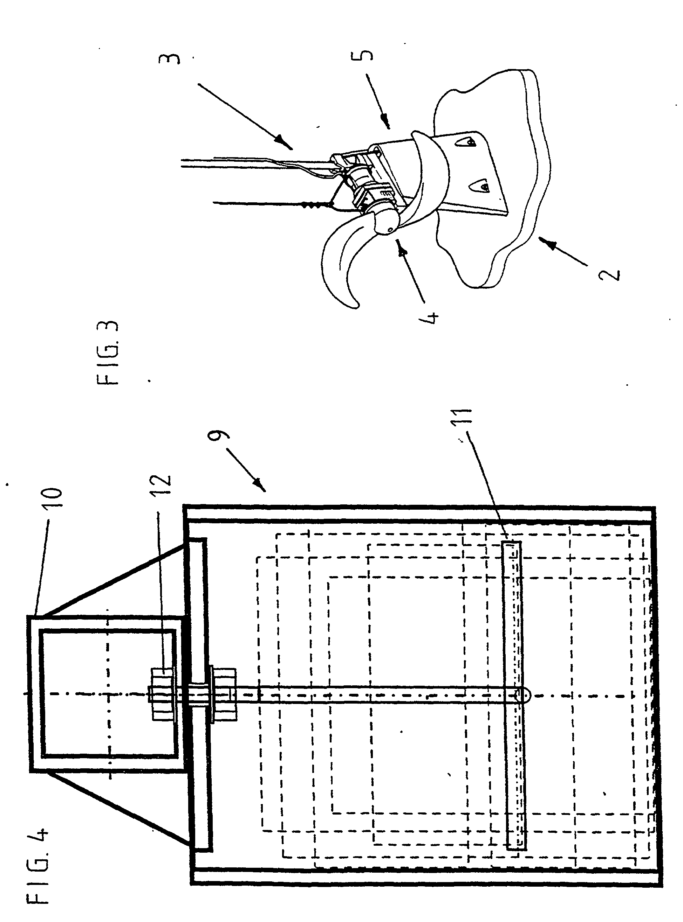

Die Montage des Querträgers 10 an der vorderen Stütze 9 ist besonders gut aus der Fig. 4 zu entnehmen. Innerhalb der Stütze 9 ist ein Stahlanker 11 eingegossen, der einen aus der Stütze 9 herausragenden Gewindebolzen 12 aufweist. An diesem Gewindebolzen ist über eine Mutter der Querträger 10 in bekannter Art und Weise befestigbar. Auf diese Weise läßt sich das Leitrohr 3 einfach wechseln durch Lösen der Muttern.

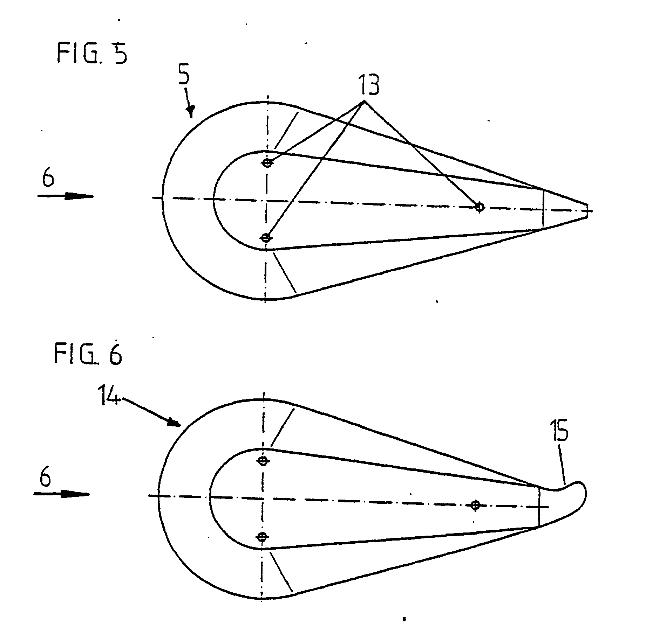

Die Fig. 5 und 6 stellen unterschiedlich ausgebildete Unterbauten von einstückigem Aufbau dar. In den Figuren ist das Tauchmotorrührwerk entfernt. Deutlich sind jedoch in allen Figuren die in dem Beton eingegossenen Gewindebolzen 13 sichtbar.

Die Fig. 6 stellt eine Ausführungsform dar, bei welcher das spitz zulaufende Ende des Unterbaus einen schräg zur Mittellängsachse des Unterbaus 14 verlaufende Nase 15 aufweist, die einstückig an dem Unterbau angegossen ist. Diese Nase 15 bewirkt eine entsprechende Umlenkung der Strömung. Durch geometrische Ausgestaltung der Nase können verschiedene Strömungsverhältnisse je nach Anwendungsfall realisiert werden.

Entscheidend sind die schwingungsdämpfenden Eigenschaften des Unterbaus. Dieser kann anstelle aus Beton auch beispielsweise aus Stahl gegossen sein.

Um vorwiegend die strömungstechnischen Probleme zu reduzieren betrifft die Erfindung ferner einen Unterbau für ein Tauchmotorrührwerk mit Rotorblättern, insbesondere für den Einsatz in Misch- und Belebungsbecken oder Pumpensümpfen oder dergleichen, mit einer auf ein Beckenboden aufsetzbaren Unterseite und einer Oberseite, an der ein im wesentlichen vertikal verlaufendes Führungselement für das Tauchmotorrührwerk befestigbar ist, wobei der Unterbau hoch genug ist, um bei Auflage des Tauchmotorrührwerks auf der Oberseite eine Berührung der Rotorblätter mit dem Beckenboden zu verhindern, der erfindungsgemäße so ausgebildet ist, daß der Unterbau eine strömungstechnisch günstige Form aufweist, um den Vordrall auf der Anströmseite des Tauchmotorrührwerks zu reduzieren.

Diese strömungstechnische Verbesserung kann beispielsweise dadurch auf einfache Weise erzielt werden, daß zwischen den Stahlrohren des Unterbaus aus dem Stand der Technik in strömungsrichtung verlaufende Metallplatten befestigt werden.

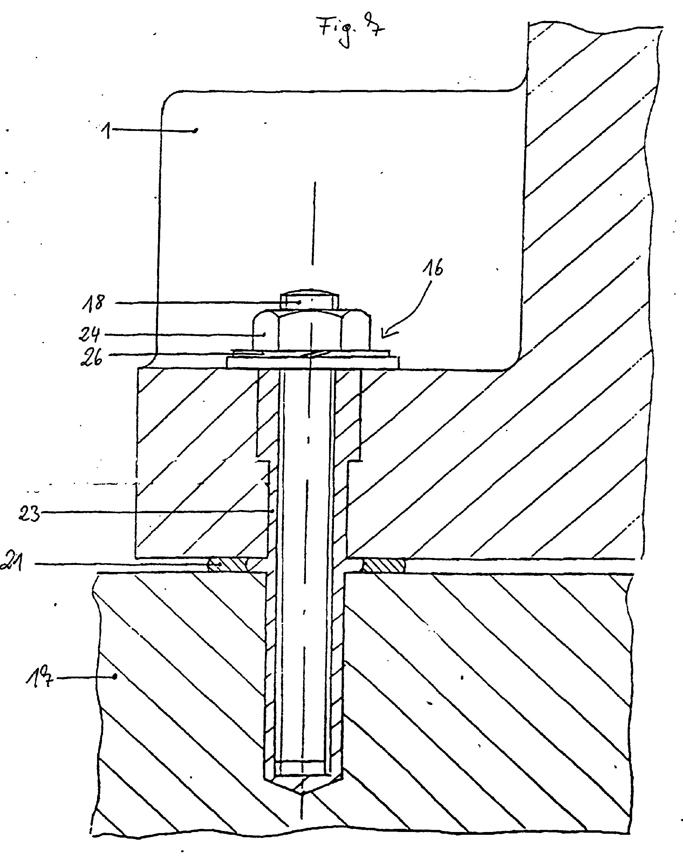

Wie dies aus Fig. 7 ersichtlich ist, kann der Unterbau 5 mittels Verbundklebeankern 16 am Boden 17 des Beckens 2 befestigt sein. Mit 18 ist eine Ankerstange bezeichnet, die vorzugsweise als Gewindestange ausgebildet ist und die in einer Ankerbohrung des Bodens 17 eingesetzt ist sowie eine Befestigungsbohrung 20 des Unterbaus 1 durchsetzt.

Mit 21 ist eine Ausgleichsmasse bezeichnet, die vor Erstellung der Ankerbohrung in die Befestigungsbohrung eingebracht wurde. Die Fließfähigkeit der Ausgleichsmasse wird so eingestellt, daß diese die Fuge zwischen dem Unterbau 1 und dem Boden 17 ausfüllt. Wenn die Ausgleichsmasse dort aushärtet, ist die Fuge 22 abgedichtet und die Ankerbohrung kann dann einen ununterbrochenen Ringraum bildend in die Befestigungsbohrung 20 übergehend niedergebracht werden.

Die Ausgleichsmasse 21 kann auch als plastische Masse unter Druck in die Befestigungsbohrung eingebracht worden sein.

Nach Erstellung der Ankerbohrung wird eine Mörtelpatrone in diese eingesetzt, beispielsweise in Form eines Mörtel und Härter enthaltenden Kunststoffschlauchs. Die Mörtelpatrone ist in ihrer Länge so gewählt, daß diese sowohl die Ankerbohrung als auch die Befestigungsbohrung ausfüllt. Durch Einbringen der Ankerstange 18 wird die Mörtelpatrone zerstört, so daß sich der Mörtel mit einem Härter mischt und eine Vermörtelung 23 der Ankerstange 18 über nahezu ihre gesamte Länge in der Ankerbohrung als auch in der Befestigungsbohrung 20 erzielt wird. Der Unterbau 1 wird über die Ankerstange 18 mit einer Mutter 24 sowie mit einer Unterlegscheibe und einem Sicherungsring 26 gegen den Boden 17 verschraubt.

### Bezugszeichenliste

- 1: Unterbau
- 2: Becken
- 3: Leitrohr
- 4: Tauchmotorrührwerk
- 5: Unterbau
- 6: Anströmung
- 7: spitz zulaufendes Ende des Unterbaus
- 8: Unterbau
- 9: Stütze
- 10: Querträger
- 11: Stahlanker
- 12: Gewindebolzen
- 13: Gewindebolzen
- 14: Unterbau
- 15: Nase
- 16: Verbundklebeanker
- 17: Boden
- 18: Ankerstange
- 21: Ausgleichsmasse
- 23: vermörtelung
- 24: Mutter
- 26: Sicherungsring

## Patentansprüche

1. Unterbau (5, 14) für ein Tauchmotorrührwerk (4) mit Rotorblättern, für den Einsatz in Misch- und Belebungsbecken oder Pumpensümpfen oder dergleichen, mit einer auf einen Beckenboden aufsetzbaren Unterseite und einer Oberseite, an der ein vertikal verlaufendes, aus einem ersten Werkstoff bestehendes Führungselement für das Tauchmotorrührwerk befestigt ist, wobei der Unterbau mit Befestigungsmitteln zur Montage auf dem Beckenboden versehen ist oder an den Beckenboden angegossen oder in diesen eingegossen ist, wobei der Unterbau hoch genug ist, um bei Auflage des Tauchmotorrührwerks auf der Oberseite eine Berührung der Rotorblätter mit dem Beckenboden zu verhindern, wobei der Unterbau (5, 14) aus mindestens einem zweiten, von dem ersten Werkstoff unterschiedlichen Werkstoff gefertigt ist, **dadurch gekennzeichnet, dass** der zweiten Werkstoff eine von dem ersten Werkstoff unterschiedliche Schwingungscharakteristik aufweist, um die von dem Rührwerk induzierten Schwingungen zu dämpfen und, dass der Unterbau einteilig ausgebildet ist.

2. Unterbau nach Anspruch 1, **dadurch gekennzeichnet, dass** der Unterbau (5, 8, 14) aus Beton gefertigt ist.

3. Unterbau nach Anspruch 1, der das Querschnittsprofil eines Tropfens oder einer Tragfläche aufweist.

4. Unterbau (8) für ein Tauchmotorrührwerk (4) mit Rotorblättern, für den Einsatz in Misch- und Belebungsbecken oder Pumpensümpfen oder dergleichen, mit einer auf einen Beckenboden aufsetzbaren Unterseite und einer Oberseite, an der ein vertikal verlaufendes, aus einem ersten Werkstoff bestehendes Führungselement für das Tauchmotorrührwerk befestigt ist, wobei der Unterbau mit Befestigungsmitteln zur Montage auf dem Beckenboden versehen ist oder an den Beckenboden angegossen oder in diesen eingegossen ist, wobei der Unterbau hoch genug ist, um bei Auflage des Tauchmotorrührwerks auf der Oberseite eine Berührung der Rotorblätter mit dem Beckenboden zu verhindern, wobei der Unterbau (8) aus mindestens einem zweiten, von dem ersten Werkstoff unterschiedlichen Werkstoff gefertigt ist, **dadurch gekennzeichnet, dass** der zweiten Werkstoff eine von dem ersten Werkstoff unterschiedliche Schwingungscharakteristik aufweist, um die von dem Rührwerk induzierten Schwingungen zu dämpfen, und, dass der Unterbau mindestens zwei kreisrunde Stützen (9) aufweist, zwischen denen mindestens eine sich in Strömungsrichtung erstreckende Platte angeordnet ist, um Verwirbelungen zu vermeiden.

5. Unterbau nach Anspruch 4, der mindestens eine Blechplatte aufweist.

6. Unterbau nach Anspruch 4 oder 5, **dadurch gekennzeichnet, dass** die im Verhältnis zur Anströmung (6) erste Stütze (9), einen größeren Durchmesser aufweist als die zweite Stütze (9), die im Verhältnis zur ersten Stütze (9) in Strömungsrichtung gelegen ist.

7. Unterbau nach einem der Ansprüche 1 bis 6, dessen Aufsetzfläche auf dem Beckenboden im Verhältnis zum restlichen Querschnitt verbreitert ist.

## Claims

1. A base structure (5, 14) for an immersed motor agitator (4) with rotor blades, for use in mixing and activation basins or pump sumps or the like, comprising a bottom side which can be placed on a basin bottom and a top side to which a vertically extending guide element comprising a first material for the immersed motor agitator is fixed, wherein the base structure is provided with fixing means for mounting on the basin bottom or are cast on to or into the basin bottom, wherein the base structure is sufficiently high to prevent the rotor blades from coming into contact with the basin bottom when the immersed motor agitator is placed on the top side, wherein the base structure (5, 14) is made from at least one second material which is different from the first material, **characterised in that** the second material has a vibrational characteristic which is different from the first material in order to damp the vibrations induced by the agitator, and that the base structure is of an integral nature.

2. A base structure according to claim 1 **characterised in that** the base structure (5, 8, 14) is made from concrete.

3. A base structure according to claim 1 which has the cross-sectional profile of a drop or an aerofoil.

4. A base structure (8) for an immersed motor agitator (4) with rotor blades, for use in mixing and activation basins or pump sumps or the like, comprising a bottom side which can be placed on a basin bottom and a top side to which a vertically extending guide element comprising a first material for the immersed motor agitator is fixed, wherein the base structure is provided with fixing means for mounting on the basin bottom or are cast on to or into the basin bottom, wherein the base structure is sufficiently high to prevent the rotor blades from coming into contact with the basin bottom when the immersed motor agitator is placed on the top side, wherein the base structure (8) is made from at least one second material which is different from the first material, **characterised in that** the second material has a vibrational characteristic which is different from the first material in order to damp the vibrations induced by the agitator, and that the base structure has at least two round supports (9), between which at least one plate extending in the flow direction is arranged in order to avoid turbulence.

5. A base structure according to claim 4 which has at least one sheet metal plate.

6. A base structure according to claim 4 or claim 5 **characterised in that** the support (9) which is first in relation to the afflux flow (6) is of a larger diameter than the second support (9) which is disposed in the flow direction in relation to the first support (9).

7. A base structure according to one of claims 1 to 6 whose placement surface on the basin bottom is enlarged in relation to the remaining cross-section.

## Revendications

1. Bâti (5, 14) pour un agitateur à moteur submersible (4) avec des pales rotatives, destiné à être utilisé dans des bassins d'activation et de mélange ou puisards à pompes ou similaires, avec un côté inférieur pouvant être posé sur le fond d'un bassin et un côté supérieur au niveau duquel un élément de guidage vertical composé d'un premier matériau est fixé pour l'agitateur à moteur submersible, sachant que le bâti est muni de moyens de fixation pour installation sur le fond du bassin ou fait corps avec le fond bassin ou est scellé dans celui-ci, sachant que le bâti est suffisamment haut pour éviter tout contact des pales avec le fond du bassin lorsque l'agitateur à moteur submersible est posé sur le côté supérieur, sachant que le bâti (5, 14) est fabriqué à partir au moins d'un deuxième matériau, différent du premier matériau, **caractérisé en ce que** le deuxième matériau présente une caractéristique de vibration différente du premier matériau, afin d'amortir les vibrations induites par l'agitateur et **en ce que** le bâti est monobloc.

2. Bâti selon la revendication 1, **caractérisé en ce que** le bâti (5, 8, 14) est en béton.

3. Bâti selon la revendication 1 présentant le profil transversal d'une goutte ou d'une surface portante.

4. Bâti (8) pour un agitateur à moteur submersible (4) avec des pales rotatives, destiné à être utilisé dans des bassins d'activation et de mélange ou puisards à pompes ou similaires, avec un côté inférieur pouvant être posé sur le fond d'un bassin et un côté supérieur au niveau duquel un élément de guidage vertical composé d'un premier matériau est fixé pour l'agitateur à moteur submersible, sachant que le bâti est muni de moyens de fixation pour installation sur le fond du bassin ou fait corps avec le fond du bassin ou est scellé dans celui-ci, sachant que le bâti est suffisamment haut pour éviter tout contact des pales avec le fond du bassin lorsque l'agitateur à moteur submersible est posé sur le côté supérieur, sachant que le bâti (8) est fabriqué à partir au moins d'un deuxième matériau, différent du premier matériau, **caractérisé en ce que** le deuxième matériau présente une caractéristique de vibration différente du premier matériau, afin d'amortir les vibrations induites par l'agitateur et **en ce que** le bâti présente au moins deux supports (9) ronds, entre lesquels une plaque s'étendant dans le sens d'écoulement est, au moins, disposée afin d'empêcher des tourbillonnements.

5. Bâti selon la revendication 4 présentant au moins une plaque de tôle.

6. Bâti selon la revendication 4 ou 5, **caractérisé en ce que** le premier support (9) en rapport avec le flux (6) présente un diamètre supérieur à celui du deuxième support (9), posé en rapport avec le premier support (9) dans le sens de l'écoulement.

7. Bâti selon l'une quelconque des revendications 1 à 6, dont la surface d'assise sur le fond du bassin est élargie en rapport avec la section transversale restante.
